# EUROPEAN PATENT APPLICATION

(11) **EP 4 742 643 A1**
(43) Date of publication of application: **13.05.2026**
(21) Application number: 24882716.4
(22) Date of filing: 14.10.2024
(51) Int. Cl.: H04M 1/72484, H04M 1/72469, H04M 1/22, H04M 1/72454

(54) **ELECTRONIC DEVICE COMPRISING LIGHT-EMITTING UNIT, AND CONTROL METHOD THEREFOR**

(30) Priority: 23.10.2023 KR 20230141823; 05.01.2024 KR 20240002394
(71) Applicant: Samsung Electronics Co., Ltd., Suwon-si, Gyeonggi-do 16677 (KR)
(72) Inventor: KIM, Joseph, Suwon-si Gyeonggi-do 16677 (KR); KIM, Juyeoung, Suwon-si Gyeonggi-do 16677 (KR); LEE, Hyungmin, Suwon-si Gyeonggi-do 16677 (KR); JUNG, Hanchul, Suwon-si Gyeonggi-do 16677 (KR)
(74) Representative: HGF
(86) International application number: PCT/KR2024/015514
(87) International publication number: WO 2025/089689

(57) **Abstract**

An electronic device is disclosed. The electronic device may comprise: a housing; at least one light-emitting unit which is disposed in one area of the housing and which emits light of a first color and/or light of a second color; a memory including one or more storage media for storing instructions; and one or more processors communicatively connected to the light-emitting unit and the memory, wherein, when executed individually or collectively by the one or more processors, the instructions cause the electronic device to detect that an event related to a first application or a second application installed in the electronic device occurs, control, if the detected event is related to the first application, the at least one light-emitting unit such that the light of the first color is emitted on the basis of at least one color related to a first icon of the first application, and, if the detected event is related to the second application, control the at least one light-emitting unit such that the light of the second color is emitted on the basis of at least one color related to a second icon of the second application.

## Description

### [Technical Field]

The disclosure relates to an electronic device including a light emitter and a method of controlling the same.

### [Background Art]

Various services and additional functions provided through electronic devices, for example, portable electronic devices such as smartphones, are gradually increasing. In order to increase the utility value of these electronic devices and meet the needs of various users, communication service providers or electronic device manufacturers are competitively developing electronic devices to provide various functions and differentiate themselves from other companies. Accordingly, various functions provided through electronic devices are becoming highly advanced.

In addition, electronic devices provide various graphical user interfaces (GUIs) for interaction with a user through a display.

The above information is presented as background information only to assist with an understanding of the disclosure. No determination has been made, and no assertion is made, as to whether any of the above might be applicable as prior art with regard to the disclosure.

### [Disclosure]

### [Technical Solution]

Aspects of the disclosure are to address at least the above-mentioned problems and/or disadvantages and to provide at least the advantages described below. Accordingly, an aspect of the disclosure is to provide an electronic device including a light emitter and a method of controlling the same.

Additional aspects will be set forth in part in the description which follows and, in part, will be apparent from the description, or may be learned by practice of the presented embodiments.

In accordance with an aspect of the disclosure, an electronic device is provided. The electronic device may comprise a housing. The electronic device may comprise at least one light emitter which is disposed in an area of the housing, configured to emit at least one of a first color light or a second color light. The electronic device may comprise memory, comprising one or more storage media, storing instructions. The electronic device may comprise one or more processors communicatively coupled to the at least one light emitter and the memory. The instructions, when executed by the one or more processors individually or collectively, may cause the electronic device to detect that an event occurs related to a first application or a second application installed in the electronic device. The instructions, when executed by the one or more processors individually or collectively, may cause the electronic device to in case that the detected event relates to the first application, control the at least one light emitter to emit first color light based on at least one color associated with a first icon image of the first application. The instructions, when executed by the one or more processors individually or collectively, may cause the electronic device to in case that the detected event relates to the second application, control the at least one light emitter to emit second color light based on at least one color associated with a second icon image of the second application.

The electronic device may comprise a display and a sensor. The instructions, when executed by the one or more processors individually or collectively, may cause the electronic device to detect, via the sensor, that the display is facing down. The instructions, when executed by the one or more processors individually or collectively, may cause the electronic device to detect that the event occurs in a first orientation of the electronic device corresponding to the display facing down. The instructions, when executed by the one or more processors individually or collectively, may cause the electronic device to while the first orientation is maintained, control the at least one light emitter to emit the first color light and/or the second color light.

The instructions, when executed by the one or more processors individually or collectively, may cause the electronic device to determine a plurality of colors based on an icon of an application corresponding to the event. The instructions, when executed by the one or more processors individually or collectively, may cause the electronic device to control the at least one light emitter to emit two or more colors light.

The instructions, when executed by the one or more processors individually or collectively, may cause the electronic device to select two colors, among the plurality of colors included in the icon of the application, based on sizes of areas of the plurality of colors. The instructions, when executed by the one or more processors individually or collectively, may cause the electronic device to control the at least one light emitter to emit two colors light in a gradient.

The electronic device may comprise a rear camera disposed in the area corresponding to a rear side of the housing. The at least one light emitter may comprise a plurality of light emitting elements disposed in a ring-shape to surround a peripheral area of the rear camera.

The instructions, when executed by the one or more processors individually or collectively, may cause the electronic device to detect that the event occurs while the display is in a low power state. The instructions, when executed by the one or more processors individually or collectively, may cause the electronic device to control the light emitter with two or more colors associated with the event while the display remains in the low power state.

The instructions, when executed by the one or more processors individually or collectively, may cause the electronic device to divide, based on a number of events being two or more, the at least one light emitter into a plurality of areas corresponding to the number of events. The instructions, when executed by the one or more processors individually or collectively, may cause the electronic device to control the at least one light emitter to emit light via the plurality of areas such that each of the plurality of areas is spaced apart from each other.

The instructions, when executed by the one or more processors individually or collectively, may cause the electronic device to divide, based on a number of events being two or more, the at least one light emitter into a plurality of areas corresponding to the number of events. The instructions, when executed by the one or more processors individually or collectively, may cause the electronic device to control the at least one light emitter to: emit light via some areas of the plurality of areas in at least one color related to the first application in which a first event occurs, and emit light via remaining areas in at least one color related to the second application in which a second event occurs.

The instructions, when executed by the one or more processors individually or collectively, may cause the electronic device to detect that the event occurs while the display is in a low power state. The instructions, when executed by the one or more processors individually or collectively, may cause the electronic device to control the light emitter with two or more colors associated with the event while the display remains in the low power state.

The instructions, when executed by the one or more processors individually or collectively, may cause the electronic device to divide, based on a number of events being two or more, the at least one light emitter into a plurality of areas corresponding to the number of events. The instructions, when executed by the one or more processors individually or collectively, may cause the electronic device to control the at least one light emitter to emit light via the plurality of areas such that each of the plurality of areas is spaced apart from each other.

The instructions, when executed by the one or more processors individually or collectively, may cause the electronic device to divide, based on a number of events being two or more, the at least one light emitter into a plurality of areas corresponding to the number of events. The instructions, when executed by the one or more processors individually or collectively, may cause the electronic device to control the at least one light emitter to: emit light via some areas of the plurality of areas in at least one color related to the first application in which a first event occurs, and emit light via remaining areas in at least one color related to the second application in which a second event occurs.

The instructions, when executed by the one or more processors individually or collectively, may cause the electronic device to determine the number of areas and the number of remaining areas among the plurality of areas based on the number of the first event occurring in the first application and the number of the second event occurring in the second application.

The at least one light emitter may includes a plurality of areas. The instructions, when executed by the one or more processors individually or collectively, may cause the electronic device to when an event related to a process progress occurs, change a light-emitting area among the plurality of areas based on a process progress rate.

The instructions, when executed by the one or more processors individually or collectively, may cause the electronic device to when an event related to a battery sharing operation with an external electronic device occurs, emit light in at least a portion of a first area of the at least one light emitter based on remaining battery amount of the electronic device, and emit light in at least a portion of a second area of the at least one light emitter that is different from the first area based on remaining battery amount of the external electronic device.

In accordance with an aspect of the disclosure, a method of controlling an electronic device is provided. The method may comprise detecting that an event occurs related to a first application or a second application installed in the electronic device. The method may comprise in case that the detected event relates to the first application, controlling the at least one light emitter to emit first color light based on at least one color associated with a first icon image of the first application. The method may comprise in case that the detected event relates to the second application, controlling the at least one light emitter to emit second color light based on at least one color associated with a second icon image of the second application.

In accordance with an aspect of the disclosure, one or more non-transitory computer-readable storage media storing one or more computer programs including computer-executable instructions that, when executed by one or more processors of an electronic device individually or collectively, may cause the electronic device to perform operations. The operations may comprise detecting that an event occurs related to a first application or a second application installed in the electronic device. The operations may comprise in case that the detected event relates to the first application, controlling the at least one light emitter to emit first color light based on at least one color associated with a first icon image of the first application. The operations may comprise in case that the detected event relates to the second application, controlling the at least one light emitter to emit second color light based on at least one color associated with a second icon image of the second application

Other aspects, advantages, and salient features of the disclosure will become apparent to those skilled in the art from the following detailed description, which, taken in conjunction with the annexed drawings, discloses various embodiments of the disclosure.

### [Description of Drawings]

The above and other aspects, features, and advantages of certain embodiments of the disclosure will be more apparent from the following description taken in conjunction with the accompanying drawings, in which:
FIG. 1 is a block diagram of an electronic device in a network environment according to an embodiment of the disclosure;
FIG. 2 is a diagram illustrating a light emitter of an electronic device according to an embodiment of the disclosure;
FIG. 3 is a flowchart illustrating an operation of controlling a light emitter of an electronic device according to an embodiment of the disclosure;
FIG. 4 is a diagram illustrating colors of a light emitter according to an embodiment of the disclosure;
FIG. 5 is a diagram illustrating an operation of determining a color of a light emitter of an electronic device according to an embodiment of the disclosure;
FIG. 6 is a diagram illustrating colors of a light emitter according to an embodiment of the disclosure;
FIG. 7 is a diagram illustrating an operation of controlling a light emitter depending on the number of events of an electronic device according to an embodiment of the disclosure;
FIG. 8 is a diagram illustrating an operation of controlling a light emitter depending on the number of applications in which events of an electronic device occurred and the number of events according to an embodiment of the disclosure;
FIG. 9 is a diagram illustrating an operation of controlling a light emitter depending on the number of applications in which events of an electronic device occurred and the number of events according to an embodiment of the disclosure;
FIG. 10 is a diagram illustrating an operation in which an electronic device controls a plurality of light emitters in the case where the electronic device includes the plurality of light emitters according to an embodiment of the disclosure;
FIG. 11 is a diagram illustrating an operation of controlling a light emitter, based on time information of an electronic device, according to an embodiment of the disclosure;
FIG. 12 is a diagram illustrating an operation of controlling a light emitter, based on remaining battery amount information of an electronic device, according to an embodiment of the disclosure;
FIG. 13 is a diagram illustrating an operation of controlling a light emitter, based on remaining battery amount information of an electronic device and an external electronic device, in a battery sharing operation of the electronic device with the external electronic device according to an embodiment of the disclosure;
FIG. 14 is a diagram illustrating an operation of controlling a light emitter, based on timer information of an electronic device, according to an embodiment of the disclosure;
FIG. 15 is a diagram illustrating an operation of controlling a light emitter, based on volume information of an electronic device, according to an embodiment of the disclosure;
FIG. 16 is a diagram illustrating an operation of controlling a light emitter, based on process progress rate information of an electronic device, according to an embodiment of the disclosure;
FIG. 17 is a diagram illustrating an operation of controlling a light emitter of an electronic device, based on information on a case mounted thereto, according to an embodiment of the disclosure; and
FIG. 18 is a diagram illustrating an operation of controlling a light emitter of an electronic device, based on information on accessories mounted thereto, according to an embodiment of the disclosure.

Throughout the drawings, it should be noted that like reference numbers are used to depict the same or similar elements, features, and structures.

### [Mode for Invention]

The following description with reference to the accompanying drawings is provided to assist in a comprehensive understanding of various embodiments of the disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the disclosure. Accordingly, it should be apparent to those skilled in the art that the following description of various embodiments of the disclosure is provided for illustration purpose only and not for the purpose of limiting the disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

It should be appreciated that the blocks in each flowchart and combinations of the flowcharts may be performed by one or more computer programs which include instructions. The entirety of the one or more computer programs may be stored in a single memory device or the one or more computer programs may be divided with different portions stored in different multiple memory devices.

Any of the functions or operations described herein can be processed by one processor or a combination of processors. The one processor or the combination of processors is circuitry performing processing and includes circuitry like an application processor (AP, e.g. a central processing unit (CPU)), a communication processor (CP, e.g., a modem), a graphics processing unit (GPU), a neural processing unit (NPU) (e.g., an artificial intelligence (AI) chip), a Wi-Fi chip, a Bluetooth chip, a global positioning system (GPS) chip, a near field communication (NFC) chip, connectivity chips, a sensor controller, a touch controller, a finger-print sensor controller, a display driver integrated circuit (IC), an audio CODEC chip, a universal serial bus (USB) controller, a camera controller, an image processing IC, a microprocessor unit (MPU), a system on chip (SoC), an IC, or the like.

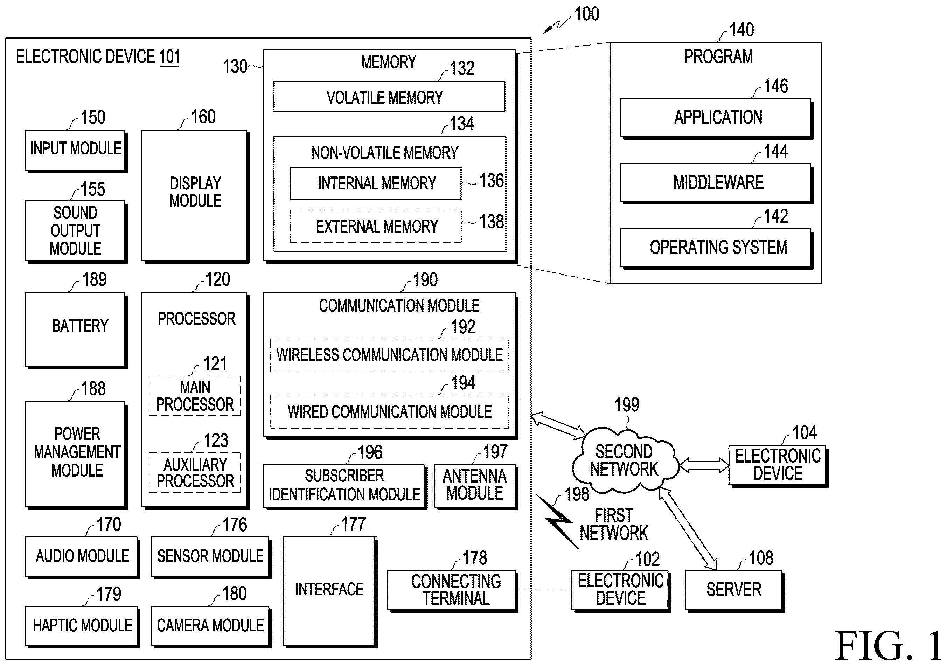

FIG. 1 is a block diagram illustrating an electronic device 101 in a network environment 100 according to an embodiment of the disclosure.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a fifth generation (5G) network, after a fourth generation (4G) network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the millimeter wave (mmWave) band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

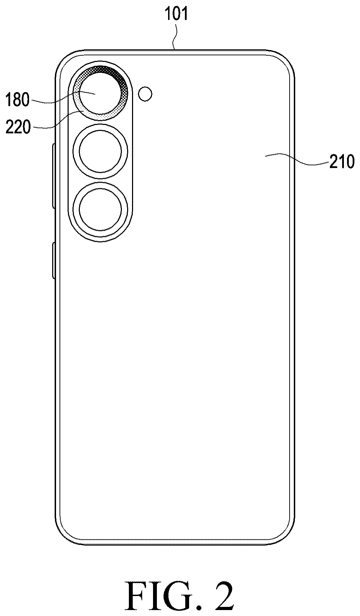

FIG. 2 is a diagram illustrating a light emitter of an electronic device according to an embodiment of the disclosure.

Referring to FIG. 2, an electronic device 101 (e.g., the electronic device 101 in FIG. 1) may include a camera 180 (e.g., the camera module 180 in FIG. 1) disposed in a first area of a housing 210. According to an embodiment, the camera 180 may be disposed in the first area of the housing, which is the opposite side of the display (e.g., the display module 160 in FIG. 1). For example, if the display is disposed on the front side of the electronic device 101, the camera 180 may be disposed on the rear side of the electronic device 101.

According to an embodiment, the camera 180 may be disposed on the same side as the display. For example, the camera 180 may be disposed in a portion of the display.

According to an embodiment, the electronic device 101 may further include a light emitter 220. According to an embodiment, the light emitter 220 may be disposed in a second area of the housing 210.

According to an embodiment, the second area may be a surrounding area of the first area. According to an embodiment, the light emitter 220 may have a ring shape surrounding the camera 180.

According to an embodiment, the light emitter 220 may be a ring-shaped light-emitting element (e.g., an LED), or may be a plurality of point-shaped light-emitting elements (e.g., LEDs) arranged in a ring shape.

According to an embodiment, although one light emitter 220 is shown in FIG. 2, there may be two or more light emitters 220 depending on an embodiment. For example, the light emitter 220 may include a plurality of ring-shaped light emitters that respectively surround a plurality of cameras in a ring shape.

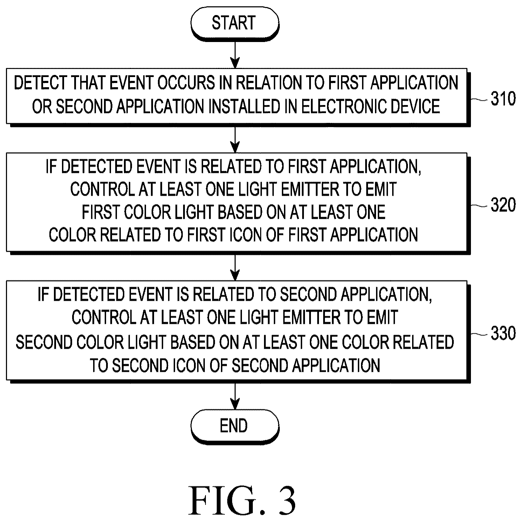

FIG. 3 is a flowchart illustrating an operation of controlling a light emitter of an electronic device according to an embodiment of the disclosure.

Referring to FIG. 3, in operation 310, an electronic device (e.g., the electronic device 101 in FIG. 1, the processor 120 in FIG. 1, or the electronic device 101 in FIG. 2) may detect that an event occurs in relation to an application installed in the electronic device.

According to an embodiment, the electronic device may detect that an event occurs in a preconfigured first state of the electronic device detected through by sensor (e.g., the sensor module 176 in FIG. 1).

According to an embodiment, in the case where a light emitter (e.g., the light emitter 220 in FIG. 2) is disposed on the same side (e.g., a portion of the display) as the display (e.g., the display module 160 in FIG. 1), the preconfigured first state may be a state in which the display is visible.

According to an embodiment, in the case where the light emitter is disposed on the opposite side of the display (e.g., the housing on the opposite side of the display), the preconfigured first state may be a state in which the display is not visible.

According to an embodiment, the sensor may include a proximity sensor, an illuminance sensor, and/or a gyro sensor. For example, if it is detected that the display of the electronic device comes into contact with another object by a proximity sensor and/or an illuminance sensor, the electronic device may identify this as the first state in which the display is invisible.

According to an embodiment, if it is detected that the display of the electronic device is overturned to face downward (e.g., the floor) by a gyro sensor, the electronic device may identify this as the first state in which the display is invisible. According to an embodiment, the electronic device may identify that the direction of the electronic device, corresponding to the state in which the display of the electronic faces downward, is a first direction. According to an embodiment, if the direction of the electronic device is the first direction, the electronic device may be identified to be in the first state.

According to an embodiment, if the electronic device detects that the display of the electronic device is overturned to face the floor through a gyro sensor and detects that the display of the electronic device is in contact with the floor through a proximity sensor and/or an illuminance sensor, the electronic device may identify the first state in which the display is invisible.

According to an embodiment, the electronic device may deactivate the display according to the electronic device in the preconfigured first state. According to an embodiment, the electronic device may detect that an event occurs while the display is inactive.

According to an embodiment, the electronic device may detect that an event occurs when the electronic device is in a low power state. According to an embodiment, the low power state may include a state in which the display is inactive or in which an AOD screen is displayed.

According to an embodiment, the event may include a notification received through at least one application installed in the electronic device. According to an embodiment, the event may include current time notification, remaining battery amount notification, remaining battery amount notification of the electronic device and an external electronic device during battery sharing, remaining timer notification, setting value (e.g., volume) control, process progress rate notification, and/or accessory (e.g., case, electronic pen, or grip accessory) attachment/detachment notification.

According to an embodiment, as will be described in operations 320 and 330 below, the electronic device may control the light emitter such that at least a portion of the light emitter emits light, based on a color determined based on an icon (e.g., an icon image) of the application corresponding to the event.

According to an embodiment, in operation 320, if the detected event is related to a first application, the electronic device may control at least one light emitter to emit a first color light, based on at least one color related to a first icon of the first application.

According to an embodiment, in operation 330, if the detected event is related to a second application, the electronic device may control at least one light emitter to emit a second color light, based on at least one color related to a second icon of the second application.

According to an embodiment, although FIG. 3 shows that operations 310 and 320 are performed sequentially, the disclosure is not limited thereto, and operations 310 and 320 may be performed selectively or at least partially performed simultaneously.

According to an embodiment, the electronic device may determine at least one color from a plurality of colors included in the icon image of the application, based on the areas of the plurality of colors.

According to an embodiment, in the case where the light emitter is divided into a plurality of areas, the electronic device may select at least one color from among a plurality of colors included in the icon image of the application, based on the area of the plurality of colors.

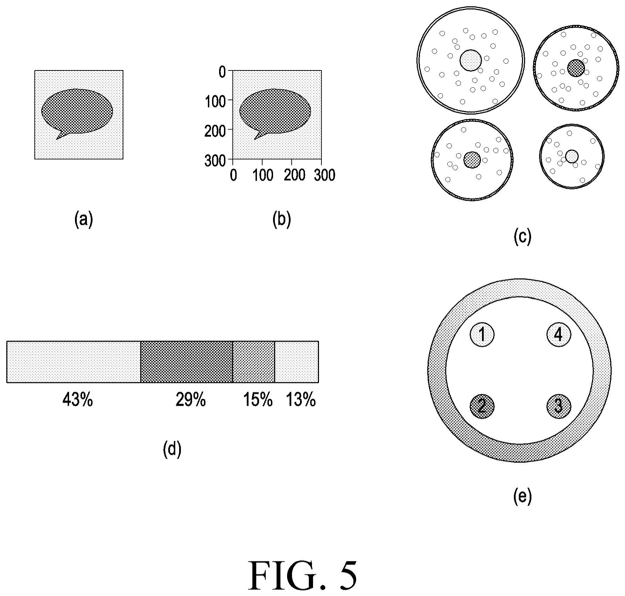

According to an embodiment, the operation of determining at least one color, based on the icon image of the application, will be described in more detail with reference to FIG. 5 below.

According to an embodiment, if an event initially through an application, the electronic device may determine at least one color, based on an icon image of the application, and store information about a plurality of determined colors in memory (e.g., the memory 130 in FIG. 1). Afterwards, if the event occurs again through the application, the electronic device may obtain at least one piece of color information stored in the memory.

According to an embodiment, while the first state or low power state is maintained, the electronic device may control the light emitter such that at least a portion of the light emitter emits light, based on the determined color.

For example, in the case where the light emitter is disposed on the same side as the display, the electronic device may control the light emitter such that at least a portion of the light emitter emits light, based on the determined color, while the display remains visible.

According to an embodiment, in the case where the light emitter is disposed on the opposite side of the display, the electronic device may control the light emitter such that at least a portion of the light emitter emits light, based on the determined color, while the display remains invisible.

According to an embodiment, the electronic device may control the light emitter such that at least a portion of the light emitter emits light in one or more colors.

According to an embodiment, the electronic device may control the light emitter to emit light in one or more colors related to the event, based on the electronic device remaining in the first state, while the display remains in the inactive state.

According to an embodiment, an electronic device may control the light emitter to emit light in a gradation of a plurality of colors. For example, an electronic device may emit light over the entire area of the light emitter in a gradation of a plurality of colors. According to an embodiment, the electronic device may emit light over the entire area of the light emitter by gradating a plurality of colors, included in the application icon image, counterclockwise (or clockwise) in order of the largest area.

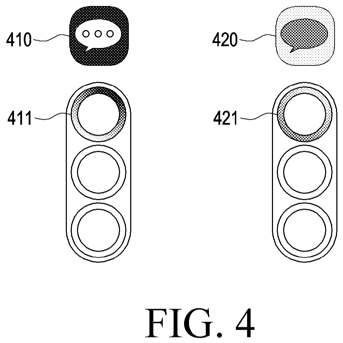

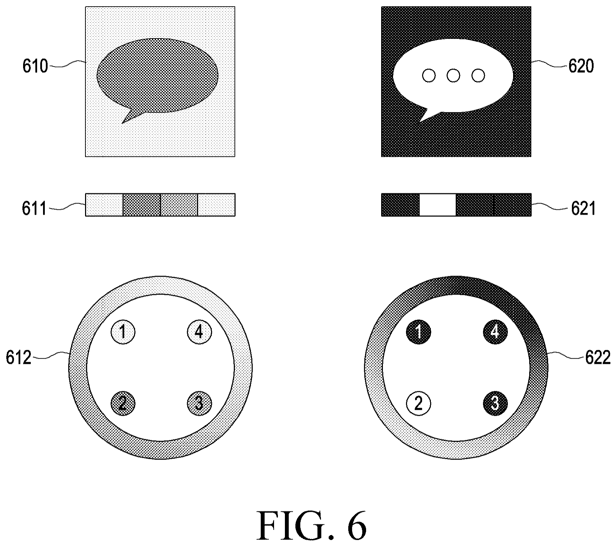

According to an embodiment, the operation of controlling the light emitter to emit light, based on a plurality of colors obtained based on the icon image of the application, will be described in more detail with reference to FIGS. 4 and 6 below.

According to an embodiment, in the case where the light emitter is divided into a plurality of areas, the electronic device may control the light emitter such that the plurality of areas emit light while being spaced apart from each other.

According to an embodiment, in the case where the light emitter is divided into a plurality of areas, the electronic device may control the light emitter such that respective areas emit light in a gradation of two selected colors.

According to an embodiment, based on the number of events being two or more, the electronic device may divide the light emitter into a plurality of areas corresponding to the number of events. According to an embodiment, two or more events may be generated by the same application or may be generated by different applications. According to an embodiment, the electronic device may control the light emitter such that each of the plurality of areas emits light in at least one color.

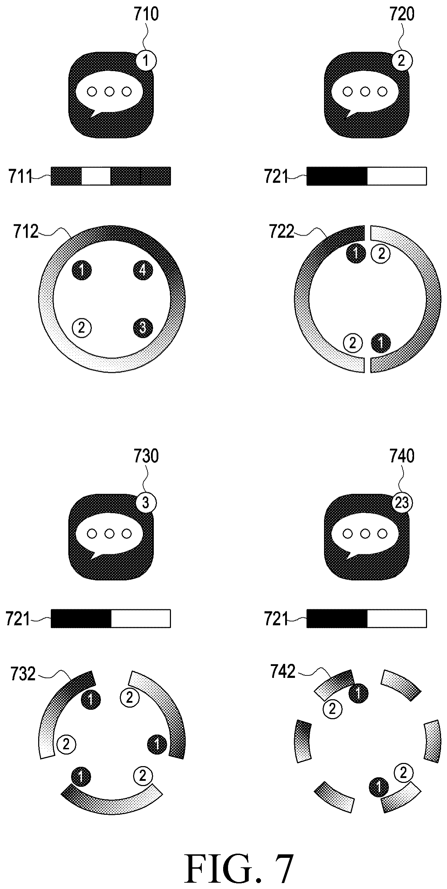

According to an embodiment, the operation of dividing the light emitter into a plurality of areas will be described in more detail with reference to FIG. 7 below.

According to an embodiment, the electronic device may control the light emitter such that some areas of a plurality of areas emit light in at least one color related to the first application in which a first event occurred and such that the remaining areas emit light in at least one color related to the second application in which a second event occurred.

According to an embodiment, the electronic device may control the light emitter such that some areas of a plurality of areas emit light in two or more colors related to the first application in which the first event occurred and such that the remaining areas emit light in two or more colors related to the second application in which the second event occurred.

According to an embodiment, the electronic device may determine the number of some areas and the number of the remaining areas among the plurality of areas, based on the number of events occurring in the first application and the number of events occurring in the second application.

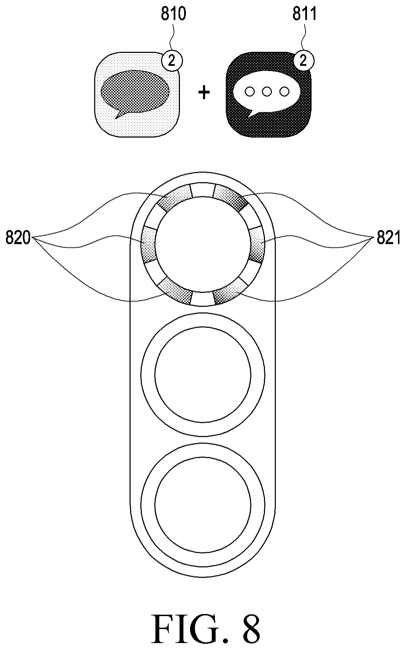

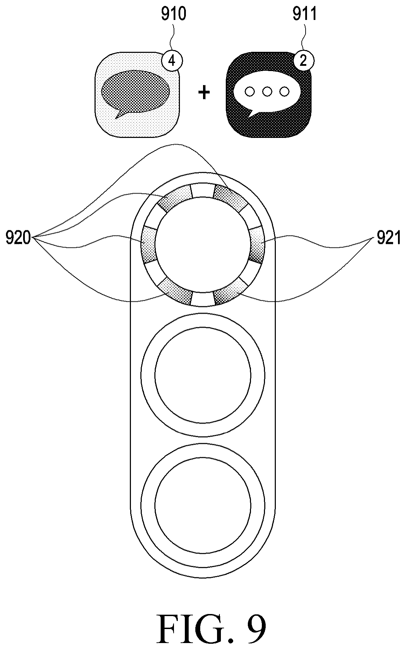

According to an embodiment, an operation of controlling the light emitter in the case where a plurality of events occur through a plurality of applications will be described in more detail with reference to FIGS. 8 and 9 below.

According to an embodiment, an electronic device may include a plurality of light emitters. For example, the plurality of light emitters may be disposed in the areas surrounding respective cameras included in the electronic device.

According to an embodiment, if a plurality of events occur through a plurality of applications, the electronic device may control a first light emitter, based on the event occurring in the first application, and control a second light emitter, based on the event occurring in the second application. For example, the electronic device may operate the first light emitter, based on the color of the icon image of the first application, and operate the second light emitter, based on the color of the icon image of the second application.

According to an embodiment, the electronic device may divide the first light emitter into a plurality of areas, based on the number of events occurring in the first application, and emit light in the respective divided areas, based on the colors of the icon image of the first application. According to an embodiment, the electronic device may divide the second light emitter into a plurality of areas, based on the number of events occurring in the second application, and emit light in the respective divided areas, based on the colors of the icon image of the second application.

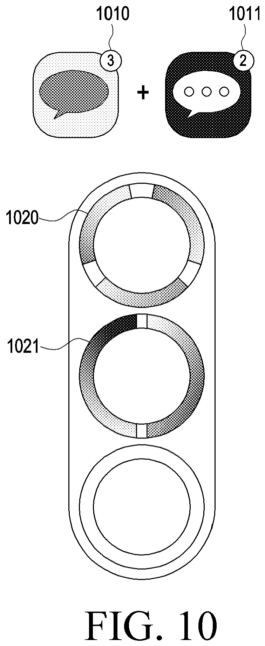

According to an embodiment, an operation of an electronic device including a plurality of light emitters when events occur through a plurality of applications will be described below with reference to FIG. 10.

According to an embodiment, even if the electronic device includes a plurality of light emitters, when an event occurs only through one application, the electronic device may emit light in a color corresponding to the application in which the event occurred only through the first light emitter.

According to an embodiment, in the case where the light emitter is divided into a plurality of areas, the electronic device may change the area that emits light, among the plurality of areas, based on a process progress rate, if the event is process progress. For example, the process may be an event in which operation continuously changes over time or under user control. For example, the process may include a timer function, changing setting values (e.g., volume), uploading, downloading, updating, or converting operations.

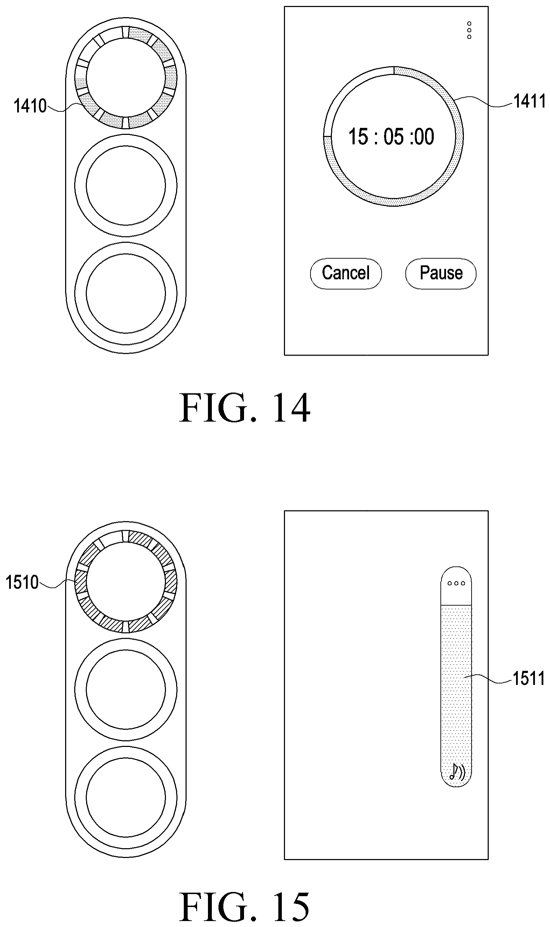

According to an embodiment, the electronic device may change the area of the light-emitting area of the light emitter in real time, based on a real time change in the process progress rate. This will be described in more detail with reference to FIGS. 14, 15, and 16 below.

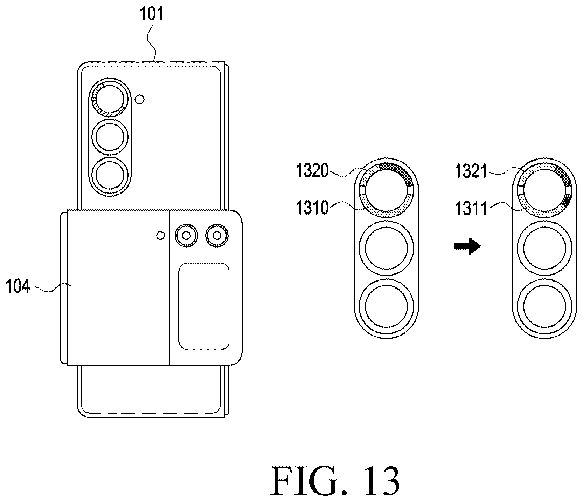

According to an embodiment, if the event is a battery sharing operation with an external electronic device, the electronic device may emit light in at least a portion of the first area of the light emitter, based on the remaining battery amount of the electronic device, and emit light in at least a portion of the second area, which is different from the first area of the light emitter, based on the remaining battery amount of the external electronic device. According to an embodiment, an operation of controlling the light emitter during the battery sharing operation will be described in more detail with reference to FIG. 13 below.

According to an embodiment, the electronic device may control the light emitter, based on the colors of accessories (e.g., case, electronic pen, and grip accessories) mounted thereto. For example, the electronic device may receive identification information and/or color information of accessory from the accessory, which is an external electronic device (e.g., the electronic device 104 in FIG. 1), through a communication module (e.g., the communication module 190 in FIG. 1) (e.g., an NFC module).

According to an embodiment, the electronic device may control the light emitter to emit light in a color corresponding to the color of the accessory, based on the received identification information and/or color information of the accessory.

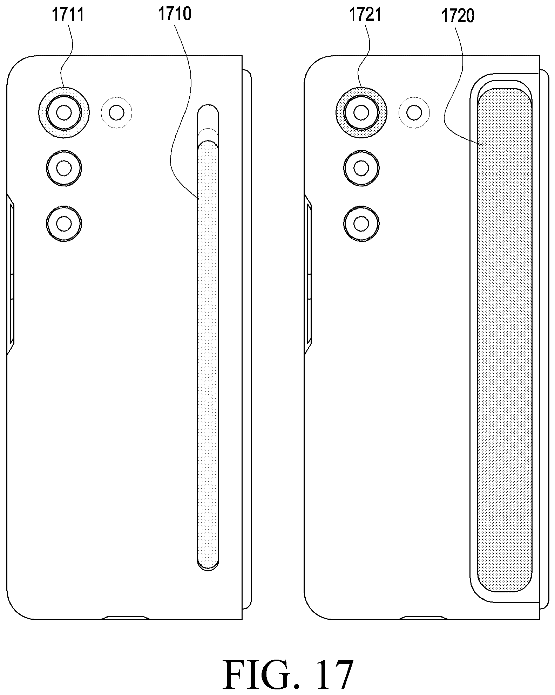

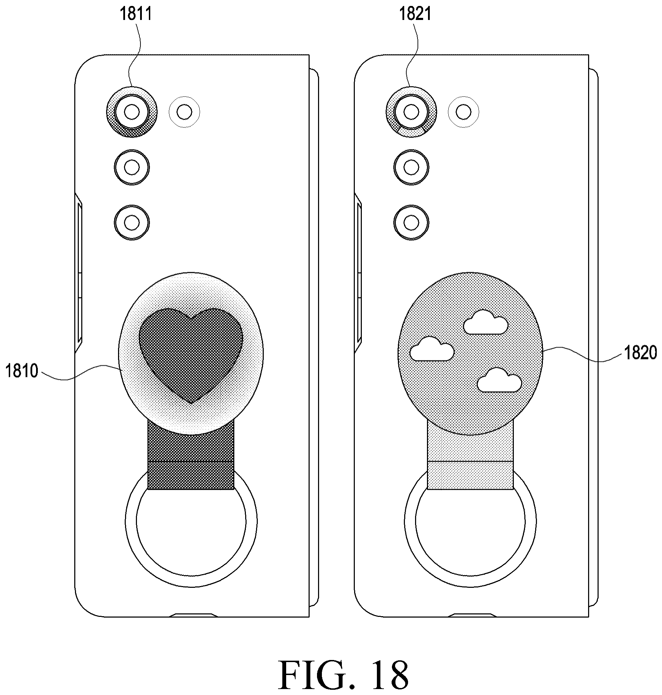

According to an embodiment, an operation of controlling the light emitter to emit light in a color corresponding to the color of the mounted accessory will be described in more detail with reference to FIGS. 17 and 18 below.

FIG. 4 is a diagram illustrating colors of a light emitter according to an embodiment of the disclosure.

Referring to FIG. 4, an electronic device (e.g., the electronic device 101 in FIG. 1, the processor 120 in FIG. 1, or the electronic device 101 in FIG. 2) may control a light emitter (e.g., the light emitter 220 in FIG. 2) to emit light in a plurality of colors 411 and 421, as well as in a single color representing application 410 or 420, by extracting a plurality of colors included in the applications 410 and 420.

According to an embodiment, in the case of extracting one color representing the application 410 or 420, the electronic device may control the light emitter to emit light in the extracted one color.

According to an embodiment, if a plurality of colors 411 and 421 are extracted, the electronic device may control the light emitter to emit light in a gradation of the plurality of colors 411 and 421.

For example, the electronic device may extract a plurality of colors included in the first application 410 and control the light emitter to emit light in a gradation of the plurality of extracted first colors 411. According to an embodiment, the electronic device may extract a plurality of colors included in the second application 420 and control the light emitter to emit light in a gradation of the plurality of extracted second colors 421.

FIG. 5 is a diagram illustrating an operation of determining a color of a light emitter of an electronic device according to an embodiment of the disclosure.

According to an embodiment, an electronic device (e.g., the electronic device 101 in FIG. 1, the processor 120 in FIG. 1, or the electronic device 101 in FIG. 2) may convert an application icon image shown in part (a) of FIG. 5 to an RGB pixel array shown in part (b) of FIG. 5.

According to an embodiment, as shown in part (c) of FIG. 5, the electronic device may specify the number of clusters (K) and form K similar-color clusters. For example, the electronic device may configure four clusters and classify respective pixels into the clusters, based on the color values of the pixels, to form the similar-color clusters.

According to an embodiment, the electronic device may calculate the percentage of average colors of each cluster and convert it into a color histogram format, as shown in part (d) of FIG. 5. For example, the electronic device may obtain the ratio of pixels respective included in the four clusters.

According to an embodiment, as shown in part (e) of FIG. 5, the electronic device may display a gradation of colors on a circular light emitter (e.g., an LED) in order of highest color frequency.

FIG. 6 is a diagram illustrating colors of a light emitter according to an embodiment of the disclosure.

Referring to FIG. 6, an electronic device (e.g., the electronic device 101 in FIG. 1, the processor 120 in FIG. 1, or the electronic device 101 in FIG. 2) may extract four representative colors 611, based on an icon image 610 of the first application. For example, the electronic device may extract four representative colors 611 using the K-means clustering algorithm.

According to an embodiment, based on the frequencies of the four extracted representative colors 611, the electronic device may display a gradation of colors 612 in one direction (clockwise or counterclockwise) from a reference point of the light emitter (e.g., the light emitter 220 in FIG. 1) in order of highest color frequency.

According to an embodiment, the four representative colors 611 extracted from the icon image 620 of the second application may be different from the four representative colors 611 extracted from the icon image 610 of the first application.

According to an embodiment, a gradation of colors 622 displayed on the light emitter, based on the frequencies of the four representative colors 611 extracted from the icon image 620 of the second application, may be different from a gradation of colors 621 displayed based on the four representative colors 611 extracted from the icon image 610 of the first application.

Accordingly, the electronic device may enable the light emitter to emit light in different colors depending on applications, thereby providing the user with information about the application in which the event occurred.

FIG. 7 is a diagram illustrating an operation of controlling a light emitter depending on the number of events of an electronic device according to an embodiment of the disclosure.

Referring to FIG. 7, an electronic device (e.g., the electronic device 101 in FIG. 1, the processor 120 in FIG. 1, or the electronic device 101 in FIG. 2) may divide the light emitter into a plurality of areas, based on the number of events. For example, the event could be a notification.

According to an embodiment, if there is one event (e.g., a notification) (710), the electronic device may emit light over the entire area 712 of the light emitter, based on a plurality of colors 711 (e.g., four) included in the icon image of the application in which the event occurred. For example, the electronic device may emit light in a gradation of a plurality of colors 711 over the entire area 712 of the light emitter.

According to an embodiment, if there are two or more events 720, 730, and 740, the electronic device may identify the top two colors 721, based on the area, from among the plurality of colors 711 included in the icon image.

According to an embodiment, if there are two or more events 720, 730, and 740, the electronic device may divide the light emitter into a plurality of areas and emit light in a gradation of two colors 721 in each area. According to an embodiment, if the number of events is equal to or greater than a configured value (e.g., six), the electronic device may divide the light emitter into only the configured maximum number of (e.g., six) areas.

For example, if there are two events 720, the electronic device may divide the light emitter into two areas and emit light in the two separate areas 722 by gradating the two colors 721 counterclockwise.

For example, if there are three events 730, the electronic device may divide the light emitter into three areas and emit light in the three separate areas 732 by gradating the two colors 721 counterclockwise.

For example, if there are 23 events 740, the electronic device may divide the light emitter into six areas, which is the maximum number, and emit light in the six separate areas 742 by gradating the two colors 721 counterclockwise.

As described above, the electronic device may divide the light emitter into a plurality of areas and emit light, based on the number of events, thereby providing information about the number of events to the user.

FIG. 8 is a diagram illustrating an operation of controlling a light emitter depending on the number of applications in which events of an electronic device occurred and the number of events according to an embodiment of the disclosure.

FIG. 9 is a diagram illustrating an operation of controlling a light emitter depending on the number of applications in which events of an electronic device occurred and the number of events according to an embodiment of the disclosure.

According to an embodiment, an electronic device (e.g., the electronic device 101 in FIG. 1, the processor 120 in FIG. 1, or the electronic device 101 in FIG. 2) may divide a light emitter (e.g., the light emitter 220 in FIG. 2) into a plurality of areas, based on the number of events. For example, the event could be a notification.

According to an embodiment, if events occur in different applications, the electronic device may emit light in each area, based on the color included in the icon image of each application.

For example, if an event occurs in each of two applications, the electronic device may emit light in a color corresponding to the first application in some areas among a plurality of areas, based on the number of events occurring in the respective applications (e.g., a ratio of events), and emits light in a color corresponding to the second application in the remaining areas.

According to an embodiment, referring to FIG. 8, if the number of events occurring in the first application is two (810) and if the number of events occurring in the second application is two (811), the electronic device may display a gradation of colors obtained based on the icon image of the first application in the half 820 (e.g., three) among the plurality of divided areas (e.g., six) of the light emitter, and display a gradation of colors obtained based on the icon image of the second application in the remaining half 821 (e.g., three).

According to an embodiment, referring to FIG. 9, if the number of events occurring in the first application is four (910) and if the number of events occurring in the second application is two (911), the electronic device may display a gradation of colors obtained based on the icon image of the first application in four areas 920 among the plurality of divided areas (e.g., six) of the light emitter, and display a gradation of colors obtained based on the icon image of the second application in the remaining two areas 921.

According to an embodiment, although events occurring in only two applications are shown in FIGS. 8 and 9, if events occur in three or more applications, the respective areas of the light emitter may emit light based on combinations of three different colors.

According to the embodiment, the electronic device may emit light in the respective areas of the light emitter, based on the color combinations of two applications in which the events occurred most recently or two applications in which the events occurred most frequently.

As described above, the electronic device may provide information on the number of events and applications in which events occur through the light emitter even if the user does not check the same through the display (e.g., the display is facing the floor or the display is inactive), thereby improving user convenience and reducing resource consumption.

FIG. 10 is a diagram illustrating an operation in which an electronic device controls a plurality of light emitters in the case where the electronic device includes the plurality of light emitters according to an embodiment of the disclosure. For example, FIG. 10 is a diagram to explain a case where there are multiple light emitters.

Referring to FIG. 10, an electronic device (e.g., the electronic device 101 in FIG. 1 or the electronic device 101 in FIG. 2) may include a plurality of light emitters (e.g., the light emitter 220 in FIG. 2). For example, the electronic device may include a plurality of cameras (e.g., the camera module 180 in FIG. 1), and the plurality of light emitters may be arranged to surround the plurality of cameras, respectively.

According to an embodiment, if the number of events occurring in the first application is three (1010) and if the number of events occurring in the second application is two (1011), the electronic device may display a gradation of colors obtained based on the icon image of the first application in the first light emitter, and display a gradation of colors obtained based on the icon image of the second application in the second light emitter.

For example, the electronic device may divide the first light emitter into three areas 1020 and display a gradation of colors obtained based on the icon image of the first application in the three divided areas 1020, respectively. According to an embodiment, the electronic device may divide the second light emitter into two areas 1021 and displays a gradation of colors obtained based on the icon image of the second application in the two divided areas 1021, respectively.

As described above, the electronic device may provide information on the number of events and applications in which events occur through the light emitter even if the user does not check the same through the display (e.g., the display is facing the floor or the display is inactive), thereby improving user convenience and reducing resource consumption.

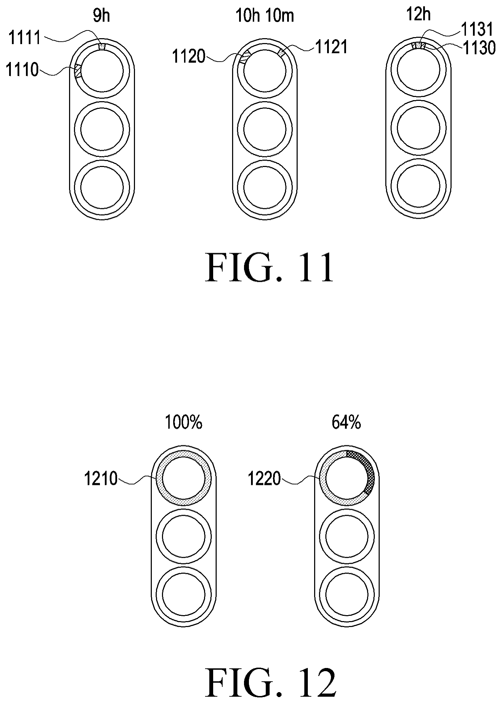

FIG. 11 is a diagram illustrating an operation of controlling a light emitter, based on time information of an electronic device, according to an embodiment of the disclosure.

According to an embodiment, an electronic device (e.g., the electronic device 101 in FIG. 1, the processor 120 in FIG. 1, or the electronic device 101 in FIG. 2) may control a light emitter (e.g., the light emitter 220 in FIG. 2), based on current time information.

According to an embodiment, the electronic device may display time using two light-emitting areas on the light emitter. For example, two light-emitting areas may correspond to the hour and minute hands, respectively.

According to an embodiment, the two light-emitting areas may differ in at least one of color or area. For example, the area of the first light-emitting area corresponding to the hour hand may be different from the area of the second light-emitting area corresponding to the minute hand. According to an embodiment, the color of the first light-emitting area corresponding to the hour hand may be different from the color of the second light-emitting area corresponding to the minute hand. According to an embodiment, the area and color of the first light-emitting area corresponding to the hour hand may be different from the area and color of the second light-emitting area corresponding to the minute hand.

For example, based on time information stating 9 o'clock, the electronic device may display the first light-emitting area 1110 corresponding to the hour hand at the position of 9 on the analog watch, and display the second light-emitting area 1111 corresponding to the minute hand at the position of 12 on the analog clock.

According to an embodiment, based on time information stating 10:10, the electronic device may display the first light-emitting area 1120 corresponding to the hour hand at the position of 10 on the analog clock, and display the second light-emitting area 1121 corresponding to the minute hand at the position of 2 on the analog clock.

According to an embodiment, based on time information stating 12 o'clock, the electronic device may display the first light-emitting area 1130 corresponding to the hour hand at the position of 12 on the analog clock, and display the second light-emitting area 1131 corresponding to the minute hand at the position of 12 on the analog clock. According to an embodiment, the electronic device may display the two light-emitting areas in different colors and emit light such that the light-emitting area with a small area is superimposed on the light-emitting area with a large area, showing that the two light-emitting areas indicate the same number of the analog clock.

As described above, the electronic device may provide time information through the light emitter even if the user does not check the same through the display (e.g., the display is facing the floor or the display is inactive), thereby improving user convenience and reducing resource consumption.

FIG. 12 is a diagram illustrating an operation of controlling a light emitter, based on remaining battery amount information of an electronic device, according to an embodiment of the disclosure.

According to an embodiment, an electronic device (e.g., the electronic device 101 in FIG. 1, the processor 120 in FIG. 1, or the electronic device 101 in FIG. 2) may control a light emitter (e.g., the light emitter 220 in FIG. 2), based on remaining battery amount information.

According to an embodiment, if the battery is fully charged (100%), the electronic device may emit light over the entire area 1210 of the light emitter.

According to an embodiment, if the battery is partially charged (e.g., 64%), the electronic device may emit light in the area 1220 of the light emitter corresponding to the remaining battery amount (e.g., 64%).

According to an embodiment, the electronic device may emit light only in the area 1220 corresponding to the remaining battery amount (e.g., 64%), among the entire area of the light emitter, or emit light in the area 1220 corresponding to the remaining battery amount (e.g., 64%) and in the remaining area in different colors from each other.

As described above, the electronic device may provide information about the remaining battery amount through the light emitter even if the user does not check the same through the display (e.g., the display is facing the floor or the display is inactive), thereby improving user convenience and reducing resource consumption.

FIG. 13 is a diagram illustrating an operation of controlling a light emitter, based on remaining battery amount information of an electronic device and an external electronic device, in a battery sharing operation of the electronic device with the external electronic device according to an embodiment of the disclosure.

Referring to FIG. 13, an electronic device 101 (e.g., the electronic device 101 in FIG. 1, the processor 120 in FIG. 1, or the electronic device 101 in FIG. 2) may control a light emitter (e.g., the light emitter 220 in FIG. 2), based on the remaining battery amount of the electronic device 101 and the remaining battery amount of an external electronic device 104 (e.g., the electronic device 104 in FIG. 1).

For example, the electronic device may divide the light emitter into two areas, and may emit light in the first area, based on the remaining battery amount of the electronic device 101 and emit light in the second area, based on the remaining battery amount of the external electronic device 104. According to an embodiment, the light emitter may be divided into two areas such as upper and lower parts or left and right parts.

For example, referring to FIG. 13, the electronic device 101 may emit light in the lower part of the light emitter, based on the remaining battery amount of the electronic device 101, and emit light in the upper part of the light emitter, based on the remaining battery amount of the external electronic device 104.

For example, if the electronic device 101 in a fully charged state (100%) starts battery sharing with the external electronic device 104 whose remaining battery amount is about 45%, the electronic device 101 may emit light over the entire area 1310 of the lower part of the light emitter and emit light in the area corresponding to 45% 1320 of the upper part area. According to an embodiment, the electronic device 101 may emit light only in the area corresponding to 45% 1320 of the upper part area of the light emitter, or may emit light in different colors between the area corresponding to 45% 1320 of the upper part area and the remaining area of the light emitter.

According to an embodiment, based on battery sharing progressing, if the remaining battery amount of the electronic device 101 becomes about 85% and if the remaining battery amount of the external electronic device 104 becomes about 60%, the electronic device 101 may emit light in the area corresponding to 85% 1311 of the total area 1310 of the lower part of the light emitter and emit light in the area corresponding to 60% 1321 of the upper part area of the light emitter. According to an embodiment, the electronic device 101 may emit light only in the area corresponding to 85% 1311 of the lower part area of the light emitter, or may emit light in different colors between the area corresponding to 85% 1311 of the lower part area of the light emitter and the remaining area. According to an embodiment, the electronic device 101 may emit light only in the area corresponding to 60% 1321 of the upper part area of the light emitter, or may emit light in different colors between the area corresponding to 60% 1321 of the upper part area of the light emitter and the remaining area.

As described above, the electronic device may provide information about the degree of battery sharing through the light emitter even if the user does not check the same through the display (e.g., the display is facing the floor or the display is inactive), thereby improving user convenience and reducing resource consumption.

FIG. 14 is a diagram illustrating an operation of controlling a light emitter, based on timer information of an electronic device, according to an embodiment of the disclosure.

FIG. 15 is a diagram illustrating an operation of controlling a light emitter, based on volume information of an electronic device, according to an embodiment of the disclosure.

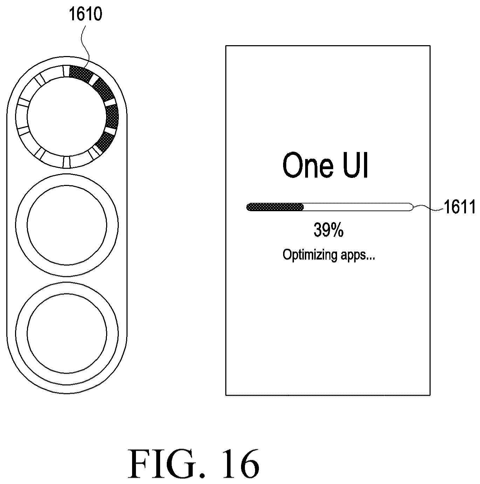

FIG. 16 is a diagram illustrating an operation of controlling a light emitter, based on process progress rate information of an electronic device, according to an embodiment of the disclosure.

According to an embodiment, an electronic device (e.g., the electronic device 101 in FIG. 1, the processor 120 in FIG. 1, or the electronic device 101 in FIG. 2) may control a light emitter (e.g., the light emitter 220 in FIG. 2), based on the process progress and/or the stage of control. For example, if the event is a process in which operations progress continuously over time or under user control, the light emitter may be controlled to emit light, based on a process progress rate.

According to an embodiment, the electronic device may change the light-emitting area of the light emitter in real time, based on the process progress rate.

According to an embodiment, referring to FIG. 14, the electronic device, based on timer information 1411, may emit light in the area 1410 of the light emitter corresponding to the remaining time of a timer.

For example, the electronic device may emit light in the area 1410 corresponding to the ratio of the remaining time to the total time of the timer.

According to an embodiment, the electronic device, based on the timer remaining time continuously decreasing, may continuously reduce the size of the light-emitting area 1410 of the light emitter.

According to an embodiment, referring to FIG. 15, the electronic device, based on volume information 1511, may emit light in the area 1510 of the light emitter corresponding to the volume.

For example, the electronic device may emit light in the area 1510 corresponding to the ratio of the current volume to the adjustable volume range.

According to an embodiment, the electronic device, based on the volume continuously adjusted by user input, may continuously adjust the size of the light-emitting area 1510 of the light emitter. For example, if the volume increases based on a user input, the electronic device may increase the size of the light-emitting area 1510 of the light emitter, and if the volume is reduced based on a user input, the electronic device may reduce the size of the light-emitting area 1510 of the light emitter.

According to an embodiment, referring to FIG. 16, the electronic device, based on the process progress rate information 1611, may emit light in the area 1610 of the light emitter corresponding to the process progress rate. For example, the process may include uploading, downloading, updating, or converting.

For example, the electronic device may emit light in the area 1610 corresponding to the process progress rate during the process.

According to an embodiment, the electronic device may increase the size of the light-emitting area 1610 of the light emitter, based on an increase in the process progress rate.

FIG. 17 is a diagram illustrating an operation of controlling a light emitter of an electronic device, based on information on a case mounted thereto, according to an embodiment of the disclosure.

Referring to FIG. 17, an electronic device (e.g., the electronic device 101 in FIG. 1, the processor 120 in FIG. 1, or the electronic device 101 in FIG. 2) may control a light emitter (e.g., the light emitter 220 in FIG. 2) to provide lighting feedback 1711 or 1721 in conjunction with a case.

For example, in the case where an electronic pen 1710 (e.g., the electronic device 104 in FIG. 1) is mounted to a case (e.g., the electronic device 104 in FIG. 1), the electronic device may receive information on whether the electronic pen 1710 is attached or detached and/or color information from the case through a communication module (e.g., the communication module 190 in FIG. 1) (e.g., an NFC module).

According to an embodiment, when the electronic pen 1710 is mounted to the case, the electronic device, based on the color information of the electronic pen 1710, may control the light emitter to provide writing feedback 1711 in a color corresponding to the color of the electronic pen 1710.

According to an embodiment, when the electronic pen 1710 is separated from the case, the electronic device may control the light emitter to provide lighting feedback 1711 in a color corresponding to the color.

As a result, the electronic device may provide feedback on whether the electronic pen 1710 is properly mounted or provide feedback when it is detached, thereby reducing the risk of loss.

According to an embodiment, if a case is mounted, the electronic device may receive, from the case, color information about a point color 1720 of the case.

According to an embodiment, the electronic device, based on the color information about the point color 1720 of the case, may control the light emitter to provide lighting feedback 1721 in a color corresponding to the point color 1720 of the case.

Accordingly, the electronic device may provide feedback as to whether the case is properly mounted.

FIG. 18 is a diagram illustrating an operation of controlling a light emitter of an electronic device, based on information on accessories mounted thereto, according to an embodiment of the disclosure.

Referring to FIG. 18, an electronic device (e.g., the electronic device 101 in FIG. 1, the processor 120 in FIG. 1, or the electronic device 101 in FIG. 2) may control a light emitter (e.g., the light emitter 220 in FIG. 2) to provide lighting feedback 1811 or 1821 in conjunction with a case.

According to an embodiment, if the accessories 1810 and 1820 are mounted to the case, the electronic device may receive information about the accessories 1810 and 1820 from the case through a communication module (e.g., the communication module 190 in FIG. 1) (e.g., an NFC module). For example, the information on the accessories 1810 and 1820 may include color information of the accessories 1810 and 1820 and/or identification information of the accessories 1810 and 1820.

According to an embodiment, the electronic device may control the light emitter to provide lighting feedback 1811 and 1821 in colors corresponding to the colors of the accessories 1810 and 1820, based on the information about the accessories 1810 and 1820.

For example, if the electronic device receives color information of the accessories 1810 and 1820 from the case, the electronic device, based on the color information about the accessories 1810 and 1820, may control the light emitter to provide lighting feedback 1811 and 1821 in colors corresponding to the colors of the accessories 1810 and 1820.

According to an embodiment, if the electronic device receives identification information of the accessories 1810 and 1820 from the case, the electronic device, based on the identification information of the accessories 1810 and 1820, may obtain color information of the accessories 1810 and 1820. According to an embodiment, the electronic device, based on the color information of the accessories 1810 and 1820, may control the light emitter to provide lighting feedback 1811 and 1821 in colors corresponding to the colors of the accessories 1810 and 1820.

As described above, the electronic device may receive information about the accessories 1810 and 1820 from the case to which the accessories 1810 and 1820 are mounted or, according to an embodiment, receive information about the accessories 1810 and 1820 from the accessories 1810 and 1820. According to an embodiment, the electronic device, based on the information about the accessories 1810 and 1820 received from the accessories 1810 and 1820, may control the light emitter to provide lighting feedback 1811 and 1821 in colors corresponding to the colors of the accessories 1810 and 1820.

According to an embodiment, an electronic device (e.g., the electronic device 101 in FIG. 1 or the electronic device 101 in FIG. 2) includes a housing, at least one light emitter (e.g., the light emitter 220 in FIG. 2) disposed in an area of the housing, the light emitter emitting a first color light and/or a second color light, a processor (e.g., the processor 120 in FIG. 1), and memory (e.g., the memory 130 in FIG. 1) storing instructions that, when executed by the processor, cause the electronic device to perform the following operations.

According to an embodiment, the instructions, when executed by the processor, may cause the electronic device to detect that an event occurs in relation to a first application or a second application installed in the electronic device.

According to an embodiment, the instructions, when executed by the processor, may cause the electronic device to control, if the detected event is related to the first application, the at least one light emitter to emit a first color light, based on at least one color related to a first icon of the first application.

According to an embodiment, the instructions, when executed by the processor, may cause the electronic device to control, if the detected event is related to the second application, the at least one light emitter to emit a second color light, based on at least one color related to a second icon of the second application.

According to an embodiment, the electronic device may further include a display and a sensor.

According to an embodiment, the instructions, when executed by the processor, may cause the electronic device to detect, via the sensor, that the display is facing downward.

According to an embodiment, the instructions, when executed by the processor, may cause the electronic device to detect that the event occurs in a first direction of the electronic device corresponding to the display facing downward.

According to an embodiment, the instructions, when executed by the processor, may cause the electronic device to control the at least one light emitter to emit the first color light and/or the second color light while the first direction is maintained.

According to an embodiment, the instructions, when executed by the processor, may cause the electronic device to determine two or more colors, based on an icon of an application corresponding to the event.

According to an embodiment, the instructions, when executed by the processor, may cause the electronic device to control the at least one light emitter to emit light in the two or more colors.

According to an embodiment, the instructions, when executed by the processor, may cause the electronic device to select two colors from among a plurality of colors included in the icon of the application, based on the areas of the plurality of colors.

According to an embodiment, the instructions, when executed by the processor, may cause the electronic device to control the at least one light emitter to emit light in a gradation of the two colors.

According to an embodiment, the electronic device may further include a rear camera disposed in the area corresponding to a rear side of the housing.

According to an embodiment, the at least one light emitter may include a plurality of light emitters arranged in a ring shape to surround the peripheral area of the rear camera.

According to an embodiment, the instructions, when executed by the processor, may cause the electronic device to detect that the event occurs while the electronic device is in a low power state.

According to an embodiment, the instructions, when executed by the processor, may cause the electronic device to control the light emitter in the two or more colors associated with the event while the low power state is maintained.

According to an embodiment, the instructions, when executed by the processor, may cause the electronic device to divide, based on the number of events being two or more, the at least one light emitter into a plurality of areas corresponding to the number of events.

According to an embodiment, the instructions, when executed by the processor, may cause the electronic device to control the at least one light emitter to emit light in the plurality of areas such that the plurality of areas are spaced apart from each other.

According to an embodiment, the instructions, when executed by the processor, may cause the electronic device to divide, based on the number of events being two or more, the at least one light emitter into a plurality of areas corresponding to the number of events.

According to an embodiment, the instructions, when executed by the processor, may cause the electronic device to control the at least one light emitter to emit light in at least one color related to the first application in which a first event occurs in some areas of the plurality of areas, and emit light in at least one color related to the second application in which a second event occurs in the remaining areas.

According to an embodiment, the instructions, when executed by the processor, may cause the electronic device to determine the number of the areas and the number of the remaining areas among the plurality of areas, based on the number of first events occurring in the first application and the number of second events occurring in the second application.

According to an embodiment, the light emitter may include a plurality of areas.

According to an embodiment, the instructions, when executed by the processor, may cause the electronic device to change, based on the event being process progress, a light-emitting area among the plurality of areas, based on a process progress rate.

According to an embodiment, the instructions, when executed by the processor, may cause the electronic device to emit light, based on the event being a battery sharing operation with an external electronic device, in at least a portion of a first area of the light emitter, based on the remaining battery amount of the electronic device, and emit light in at least a portion of a second area of the light emitter, which is different from the first area, based on the remaining battery amount of the external electronic device.

According to an embodiment, a method of controlling an electronic device may include detecting that an event occurs in relation to a first application or a second application installed in the electronic device.

According to an embodiment, a method of controlling an electronic device may include controlling, if the detected event is related to the first application, at least one light emitter to emit a first color light, based on at least one color related to a first icon of the first application.

According to an embodiment, a method of controlling an electronic device may include controlling, if the detected event is related to the second application, the at least one light emitter to emit a second color light, based on at least one color related to a second icon of the second application.

According to an embodiment, the detecting that an event occurs may include detecting that the display of the electronic device is facing downward through a sensor of the electronic device, and detecting that the event occurs in a first direction of the electronic device corresponding to the display facing downward.

According to an embodiment, the controlling the at least one light emitter to emit the first color light or the controlling the at least one light emitter to emit the second color light may include controlling the at least one light emitter to emit the first color light and/or the second color light while the first direction is maintained.

According to an embodiment, the controlling the at least one light emitter to emit the first color light or the controlling the at least one light emitter to emit the second color light may include determining two or more colors, based on an icon of an application corresponding to the event.

According to an embodiment, the controlling the at least one light emitter to emit the first color light or the controlling the at least one light emitter to emit the second color light may include controlling the at least one light emitter to emit light in the two or more colors.

According to an embodiment, the controlling the at least one light emitter to emit the first color light or the controlling the at least one light emitter to emit the second color light may include selecting the two colors from among a plurality of colors included in the icon of the application, based on the areas of the plurality of colors.

According to an embodiment, the controlling the at least one light emitter to emit the first color light or the controlling the at least one light emitter to emit the second color light may include controlling the at least one light emitter to emit light in a gradation of the two colors.

According to an embodiment, the controlling the at least one light emitter to emit the first color light or the controlling the at least one light emitter to emit the second color light may include selecting two colors from among the plurality of colors included in the icon of the application, based on the areas of the plurality of colors.

According to an embodiment, the controlling the at least one light emitter to emit the first color light or the controlling the at least one light emitter to emit the second color light may include controlling the at least one light emitter to emit light in a gradation of the two colors.

According to an embodiment, a rear camera of the electronic device may be disposed in an area corresponding to a rear side of a housing.

According to an embodiment, the at least one light emitter may include a plurality of light emitters arranged in a ring shape to surround the peripheral area of the rear camera.

According to an embodiment, the detecting that an event occurs may include detecting that the event occurs when the electronic device is in a low power state.

According to an embodiment, the controlling the at least one light emitter to emit the first color light or the controlling the at least one light emitter to emit the second color light may include controlling the light emitter with the two or more colors related to the event while the low power state is maintained.

According to an embodiment, the method of controlling an electronic device may further include, based on the number of events being two or more, dividing the at least one light emitter into a plurality of areas corresponding to the number of events.

According to an embodiment, the controlling the at least one light emitter to emit the first color light or the controlling the at least one light emitter to emit the second color light may include controlling the at least one light emitter to emit light in at least one color related to the first application in which a first event occurred in some areas among the plurality of areas and emit light in at least one color related to the second application in which a second event occurred in the remaining areas.

According to an embodiment, the controlling the at least one light emitter to emit the first color light or the controlling the at least one light emitter to emit the second color light may include determining the number of the areas and the number of the remaining areas among the plurality of areas, based on the number of first events occurring in the first application and the number of second events occurring in the second application.

According to an embodiment, the method of controlling an electronic device may further include changing, based on the event being process progress, a light-emitting area among the plurality of areas included in the at least one light emitter, based on a process progress rate.

According to an embodiment, the method of controlling an electronic device may include emitting light, based on the event being a battery sharing operation with an external electronic device, in at least a portion of a first area of the at least one light emitter, based on the remaining battery amount of the electronic device, and emitting light in at least a portion of a second area of the at least one light emitter, which is different from the first area, based on the remaining battery amount of the external electronic device.

According to an embodiment, in a non-transitory computer-readable recording medium storing one or more programs, the one or more programs may include instructions configured to cause an electronic device to detect that an event occurs in relation to a first application or a second application installed in the electronic device.

According to an embodiment, the one or more programs may include instructions configured to cause the electronic device to control, if the detected event is related to the first application, at least one light emitter of the electronic device to emit a first color light, based on at least one color related to a first icon of the first application.

According to an embodiment, the one or more programs may include instructions configured to cause the electronic device to control, if the detected event is related to the second application, the at least one light emitter to emit a second color light, based on at least one color related to a second icon of the second application.

According to an embodiment, the electronic device may further include a display and a sensor.

According to an embodiment, the one or more programs may include instructions that, when executed by the processor, cause the electronic device to detect, via the sensor, that the display is facing downward.

According to an embodiment, the one or more programs may include instructions that, when executed by the processor, cause the electronic device to detect that the event occurs in a first direction of the electronic device corresponding to the display facing downward.

According to an embodiment, the one or more programs may include instructions that, when executed by the processor, cause the electronic device to control the at least one light emitter to emit the first color light and/or the second color light while the first direction is maintained.

According to an embodiment, the one or more programs may include instructions that, when executed by the processor, cause the electronic device to determine two or more colors, based on an icon of an application corresponding to the event.

According to an embodiment, the one or more programs may include instructions that, when executed by the processor, cause the electronic device to control the at least one light emitter to emit light in the two or more colors.

According to an embodiment, the one or more programs may include instructions that, when executed by the processor, cause the electronic device to select two colors from among a plurality of colors included in the icon of the application, based on the areas of the plurality of colors.

According to an embodiment, the one or more programs may include instructions that, when executed by the processor, cause the electronic device to control the at least one light emitter to emit light in a gradation of the two colors.

According to an embodiment, the electronic device may further include a rear camera disposed in the area corresponding to a rear side of the housing.

According to an embodiment, the at least one light emitter may include a plurality of light emitters arranged in a ring shape to surround the peripheral area of the rear camera.

According to an embodiment, the one or more programs may include instructions that, when executed by the processor, cause the electronic device to detect that the event occurs while the electronic device is in a low power state.

According to an embodiment, the one or more programs may include instructions that, when executed by the processor, cause the electronic device to control the light emitter in the two or more colors associated with the event while the low power state is maintained.

According to an embodiment, the one or more programs may include instructions that, when executed by the processor, cause the electronic device to divide, based on the number of events being two or more, the at least one light emitter into a plurality of areas corresponding to the number of events.

According to an embodiment, the one or more programs may include instructions that, when executed by the processor, cause the electronic device to control the at least one light emitter to emit light in the plurality of areas such that the plurality of areas are spaced apart from each other.

According to an embodiment, the one or more programs may include instructions that, when executed by the processor, cause the electronic device to divide, based on the number of events being two or more, the at least one light emitter into a plurality of areas corresponding to the number of events.

According to an embodiment, the one or more programs may include instructions that, when executed by the processor, cause the electronic device to control the at least one light emitter to emit light in at least one color related to the first application in which a first event occurs in some areas of the plurality of areas, and emit light in at least one color related to the second application in which a second event occurs in the remaining areas.

According to an embodiment, the one or more programs may include instructions that, when executed by the processor, cause the electronic device to determine the number of the areas and the number of the remaining areas among the plurality of areas, based on the number of first events occurring in the first application and the number of second events occurring in the second application.

According to an embodiment, the light emitter may include a plurality of areas.

According to an embodiment, the one or more programs may include instructions that, when executed by the processor, cause the electronic device to change, based on the event being process progress, a light-emitting area among the plurality of areas, based on a process progress rate.

According to an embodiment, the one or more programs may include instructions that, when executed by the processor, cause the electronic device to emit light, based on the event being a battery sharing operation with an external electronic device, in at least a portion of a first area of the light emitter, based on the remaining battery amount of the electronic device, and emit light in at least a portion of a second area of the light emitter, which is different from the first area, based on the remaining battery amount of the external electronic device.

The electronic device according to an embodiment may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that an embodiment of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with an embodiment of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

An embodiment as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to an embodiment of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to an embodiment, each component (e.g., a module or a program) of the above-described components may include a single entity or multiple entities, and some of the multiple entities may be separately disposed in different components. According to an embodiment, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to an embodiment, operations performed by the module, the program, or another component may be carried out sequentially, in parallel, repeatedly, or heuristically, or one or more of the operations may be executed in a different order or omitted, or one or more other operations may be added.

It will be appreciated that various embodiments of the disclosure according to the claims and description in the specification can be realized in the form of hardware, software or a combination of hardware and software.

Any such software may be stored in non-transitory computer readable storage media. The non-transitory computer readable storage media store one or more computer programs (software modules), the one or more computer programs include computer-executable instructions that, when executed by one or more processors of an electronic device individually or collectively, cause the electronic device to perform a method of the disclosure.

Any such software may be stored in the form of volatile or non-volatile storage such as, for example, a storage device like read only memory (ROM), whether erasable or rewritable or not, or in the form of memory such as, for example, random access memory (RAM), memory chips, device or integrated circuits or on an optically or magnetically readable medium such as, for example, a compact disk (CD), digital versatile disc (DVD), magnetic disk or magnetic tape or the like. It will be appreciated that the storage devices and storage media are various embodiments of non-transitory machine-readable storage that are suitable for storing a computer program or computer programs comprising instructions that, when executed, implement various embodiments of the disclosure. Accordingly, various embodiments provide a program comprising code for implementing apparatus or a method as claimed in any one of the claims of this specification and a non-transitory machine-readable storage storing such a program.

While the disclosure has been shown and described with reference to various embodiments thereof, it will be understood by those skilled in the art that various changes in form and details may be made therein without departing from the spirit and scope of the disclosure as defined by the appended claims and their equivalents.

## Claims

1. An electronic device (101), comprising:
a housing (210);
at least one light emitter (220), which is disposed in an area of the housing, configured to emit at least one of first color light or second color light;
memory (130), comprising one or more storage media, storing instructions; and
one or more processors (120) communicatively coupled to the at least one light emitter and the memory,
wherein the instructions, when executed by the one or more processors individually or collectively, cause the electronic device to:
detect that an event occurs related to a first application or a second application installed in the electronic device,
in case that the detected event relates to the first application, control the at least one light emitter to emit the first color light based on at least one color associated with a first icon image of the first application, and
in case that the detected event relates to the second application, control the at least one light emitter to emit the second color light based on at least one color associated with a second icon image of the second application.

2. The electronic device of claim 1, further comprising:
a display (160); and
a sensor (176),
wherein the instructions, when executed by the one or more processors individually or collectively, further cause the electronic device to:
detect, via the sensor, that the display is facing down,
detect that the event occurs in a first orientation of the electronic device corresponding to the display facing down, and
while the first orientation is maintained, control the at least one light emitter to emit the first color light and/or the second color light.

3. The electronic device of claim 1 or claim 2, wherein the instructions, when executed by the one or more processors individually or collectively, further cause the electronic device to:
determine a plurality of colors based on an icon of an application corresponding to the event; and
control the at least one light emitter to emit two or more colors light.

4. The electronic device of claim 3, wherein the instructions, when executed by the one or more processors individually or collectively, further cause the electronic device to:
select two colors, among the plurality of colors included in the icon of the application, based on sizes of areas of the plurality of colors; and
control the at least one light emitter to emit two colors light in a gradient.

5. The electronic device of any one of claim 1 to claim 4, further comprising:
a rear camera disposed in the area corresponding to a rear side of the housing,
wherein the at least one light emitter comprises a plurality of light emitting elements disposed in a ring-shape to surround a peripheral area of the rear camera.

6. The electronic device of any one of claim 1, claim 3 to claim 5, wherein the instructions, when executed by the one or more processors individually or collectively, further cause the electronic device to:
detect that the event occurs while the display is in a low power state; and
control the light emitter with two or more colors associated with the event while the display remains in the low power state.

7. The electronic device of any one of claim 1 to claim 6, wherein the instructions, when executed by the one or more processors individually or collectively, further cause the electronic device to:
divide, based on a number of events being two or more, the at least one light emitter into a plurality of areas corresponding to the number of events; and
control the at least one light emitter to emit light via the plurality of areas such that each of the plurality of areas is spaced apart from each other.

8. The electronic device of any one of claim 1 to claim 7, wherein the instructions, when executed by the one or more processors individually or collectively, further cause the electronic device to:
divide, based on a number of events being two or more, the at least one light emitter into a plurality of areas corresponding to the number of events; and
control the at least one light emitter to:
emit light via some areas of the plurality of areas in at least one color related to the first application in which a first event occurs, and
emit light via remaining areas in at least one color related to the second application in which a second event occurs.

9. The electronic device of claim 8, wherein the instructions, when executed by the one or more processors individually or collectively, further cause the electronic device to:
determine the number of areas and the number of remaining areas among the plurality of areas based on the number of the first event occurring in the first application and the number of the second event occurring in the second application.

10. The electronic device of any one of claim 1 to claim 9,
wherein the at least one light emitter includes a plurality of areas, and
wherein the instructions, when executed by the one or more processors individually or collectively, further cause the electronic device to:
when an event related to a process progress occurs, change a light-emitting area among the plurality of areas based on a process progress rate.

11. The electronic device of any one of claim 1 to claim 10, wherein the instructions, when executed by the one or more processors individually or collectively, further cause the electronic device to:
when an event related to a battery sharing operation with an external electronic device occurs, emit light in at least a portion of a first area of the at least one light emitter based on remaining battery amount of the electronic device; and
emit light in at least a portion of a second area of the at least one light emitter that is different from the first area based on remaining battery amount of the external electronic device.

12. A method of controlling an electronic device (101), the method comprising:
detecting (310) that an event occurs in relation to a first application or a second application installed in the electronic device;
in case that the detected event relates to the first application, controlling (320) at least one light emitter to emit a first color light, based on at least one color related to a first icon of the first application; and
in case that the detected event relates to the second application, controlling (330), the at least one light emitter to emit a second color light, based on at least one color related to a second icon of the second application.

13. The method of claim 12, wherein the method further comprises at least one operation of the electronic device in one of claims 2 to 11.

14. One or more non-transitory computer-readable storage media storing one or more computer programs including computer-executable instructions that, when executed by one or more processors (120) of an electronic device (101) individually or collectively, cause the electronic device (101) to perform operations, the operations comprising:
detecting (310) that an event occurs in relation to a first application or a second application installed in the electronic device;
in case that the detected event relates to the first application, controlling (320) at least one light emitter of the electronic device to emit a first color light, based on at least one color related to a first icon of the first application; and
in case that the detected event relates to the second application, controlling (330) the at least one light emitter to emit a second color light, based on at least one color related to a second icon of the second application.

15. The one or more non-transitory computer-readable storage media of claim 14,
wherein the operations further comprises at least one operation of the electronic device in one of claims 2 to 11.
